# EUROPEAN PATENT APPLICATION

(11) **EP 0 867 804 A2**
(43) Date of publication of application: **30.09.1998**
(21) Application number: 98301998.5
(22) Date of filing: 17.03.1998
(51) Int. Cl.: G06F 9/355

(54) **Triangular addressing**

(30) Priority: 28.03.1997 US 828455
(71) Applicant: LUCENT TECHNOLOGIES INC., Murray Hill, New Jersey 07974-0636 (US)
(72) Inventor: Prasad, Mohit Kishore, Bethlehem, Pennsylvania 18017 (US)
(74) Representative: Buckley, Christopher Simon Thirsk

(57) **Abstract**

There is disclosed, an integrated circuit which includes a memory management system. A first address register (24 or 28) is adapted to store a first address (26 or 30). A first address changing device (78 or 92) is adapted to change the first address stored in the first address register. A selector (74 or 88) adapted to determine the size of the change of the first address is coupled to the first address changing device (78 or 92) for changing the first address. The invention also encompasses a method of addressing memory.

## Description

### Technical Field

This application relates generally to modulo address generation for microprocessors and digital signal processors, and particularly to specialized circuitry and method for generating a sequence of address values using triangular addressing.

### Background of the Invention

Many applications performed on microprocessors or digital signal processors require the generation of addresses to fetch data from memory. One such application requires the appearance of a circular buffer such that data stored in a finite portion of a memory array appears to be endless. The addressing technique used for circular buffers, known as modulo addressing, provides that an address pointer, which contains an address, will be incremented or decremented by a predetermined displacement for each data fetch until a beginning or ending address boundary is reached, such that the address pointer for the next fetch will "wrap around" to the other end of the address range of the finite array.

Modulo addressing is achieved in an address arithmetic unit by associating with a memory pointer a first register which stores the beginning address, and a second register which stores the ending address. For modulo addressing, once the first register is set with a beginning address and also once the second register is set with an ending address, the register contents are not changed during cycles or iterations through the address range of the finite array.

One shortcoming of modulo addressing is that in establishing the circular buffer, data from the entire array must be accessed or fetched before "wrapping around" to the other end of the address range. Some applications, such as correlations, spectral smoothing, and linear predictive coefficient computations, require access to data in a buffer in which the start or end address, or both, change each iteration. Under these changing starting or ending address conditions, since the memory locations accessed differ for each iteration, the starting and ending addresses must be stored in memory in order to be changed, consuming valuable memory space and clock cycles to accomplish the address change.

What is needed is a technique for establishing a modulo-type addressing scheme that allows the wrap around to occur prior to accessing or fetching data from the entirety of the finite data array.

### Summary of the Invention

In accordance with the present invention, an integrated circuit includes a memory management system. A first address register is adapted to store a first address. A first address changing device is adapted to change the first address stored in the first address register. A selector adapted to determine the size of the change of the first address is coupled to the first address changing device for changing the first address. The invention also encompasses a method of addressing memory.

### Brief Description of the Drawing

Figure 1 is a portion of an address arithmetic unit in accordance with an illustrative embodiment of the invention;
Figure 2 is a portion of a memory array;
Figure 3 is a table illustrating triangular addressing where the ending address is increased;
Figure 4 is a table illustrating triangular addressing where the ending address is decreased;
Figure 5 is a table illustrating triangular addressing where the beginning address is increased;
Figure 6 is a table illustrating triangular addressing, where the beginning address is decreased;
Figure 7 is a table illustrating triangular addressing where both the beginning and ending addresses are increased;
Figure 8 is a table illustrating triangular addressing where both the beginning and ending addresses are increased by the same value after each iteration; and
Figure 9 is a table illustrating triangular addressing where the ending address is increased for several iterations then decreased for several iterations.

### Detailed Description

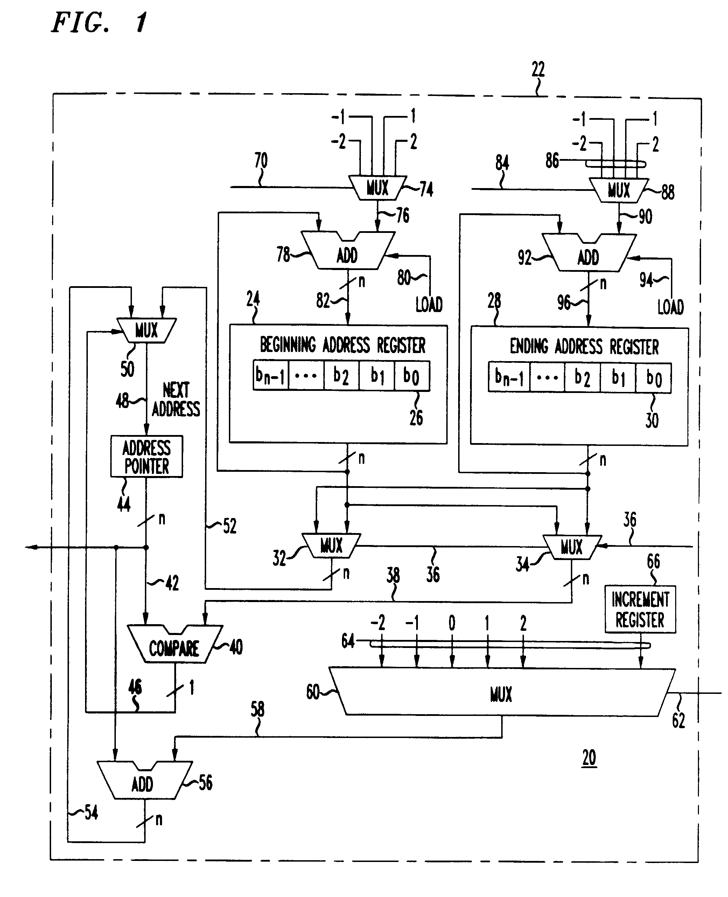

The address management system 20 of the present invention may be used in a microprocessor, microcontroller, or digital signal processor. Figure 1 illustrates a portion of an address arithmetic unit 22. Beginning address register 24 is loaded with a beginning address 26 and ending address register 28 is loaded with an ending address 30. The beginning address 26 and ending address 30 are provided as inputs to multiplexers 32 and 34 which are controlled by select input 36. The output of multiplexer 34 is provided as a first input 38 to comparator 40. Address pointer 44 is initially set to the first address to be accessed, which is typically the initial beginning address. The second input 42 to comparator 40 is provided by address pointer 44 which points to the next address from which data is to be fetched. The output 46 from comparator 40 is one bit, indicating whether the address in address pointer 44 is the same as or different from the beginning address or ending address 38 as selected by multiplexer 34. The next address 48 is selected by multiplexer 50 based on output 46 from comparator 40 either as output 52 from multiplexer 32, or output 54 from adder 56.

Adder 56 receives the address to which the address pointer is pointing, which is also the second input 42 to comparator 40, as a first input and the output 58 of multiplexer 60 as a second input. Adder 56 adds the first and second inputs to generate output 54. Select input 62 controls multiplexer 60 to select one of inputs 64 as output 58. Input 64 may typically be 2, 1, 0, -1, -2, or a value stored in increment register 66.

In accordance with the present invention, the beginning address 26 retained in beginning address register 24 can be incremented, decremented, or remain unchanged. Similarly, the ending address 30 retained in ending address register 28 can be incremented, decremented, or remain unchanged. Incrementing or decrementing the beginning address or ending address, in any combination, could occur each iteration through a loop, and would typically be set up prior to or in parallel with the iteration. Counting between the beginning address and ending address may occur in either direction. A variable length circular buffer results with the potential of the length changing each iteration through a loop.

Incrementing or decrementing the beginning address is accomplished by select input 70 selecting one of inputs 72 to multiplexer 74 as output 76. Output 76 provides a first input to adder 78, which receives the beginning address 26 output from beginning address register 24 as a second input. Adder 78 adds the two inputs when load control signal 80 is high and does not add the two inputs when load control signal 80 is low. In this manner, load control signal 80 may be employed to retain the current beginning address 26 in beginning address register 24 rather than require an addition of zero.

Incrementing or decrementing the ending address is accomplished in a similar manner. Select input 84 selects one of inputs 86 to multiplexer 88 as output 90. Output 90 provides a first input to adder 92, which receives the ending address 30 output from ending address register 28 as a second input. Adder 92 adds the two inputs when load control signal 94 is high and does not add the two inputs when load control signal 94 is low. Load control signal 94, when low, causes the current ending address 30 in ending address register 28 to be retained rather than require an addition of zero.

Typical inputs to multiplexers 74 and 88 are -2, -1, 1, and 2. The negative values provide for decrementing the address while the positive values provide for incrementing the address.

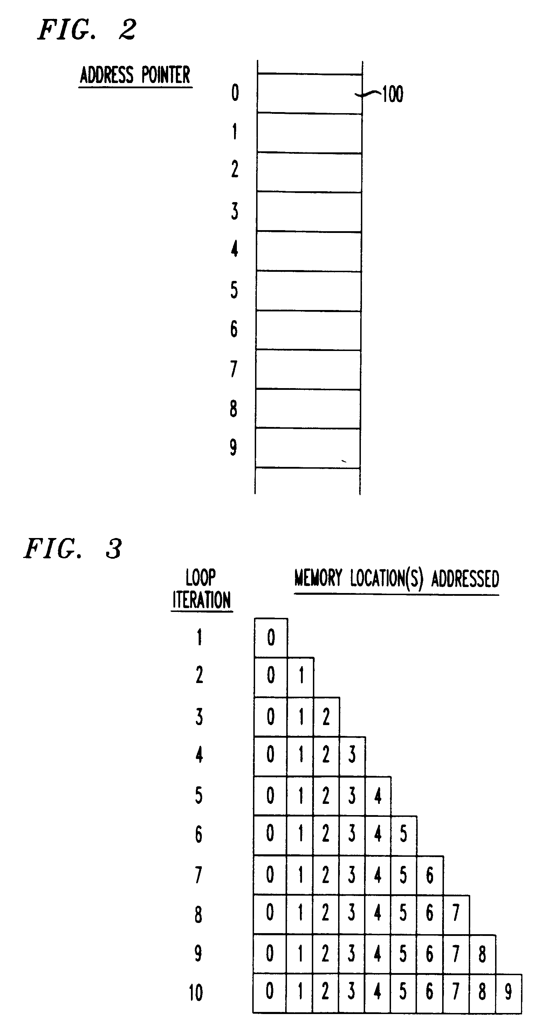

Figure 2 is a portion of a memory array 100 illustrating ten memory locations, numbered 0 through 9, useful in understanding the tables of Figures 3 through 8.

Figures 3 through 8 show various tables illustrating triangular addressing. Figure 3 illustrates triangular addressing where the beginning address remains constant and the ending address is increased by one, each loop iteration. This version of triangular addressing may be referred to as a lower left triangle of addresses. Under the conditions illustrated in Figure 3, load control signal 80 remains low retaining the initial beginning address in beginning address register 24. Select input 84 selects from inputs 86 the increment one as output 90. Load control signal 94 is high. Thus each iteration the ending address register is incremented by one. A loop having ten iterations is illustrated in Figure 3.

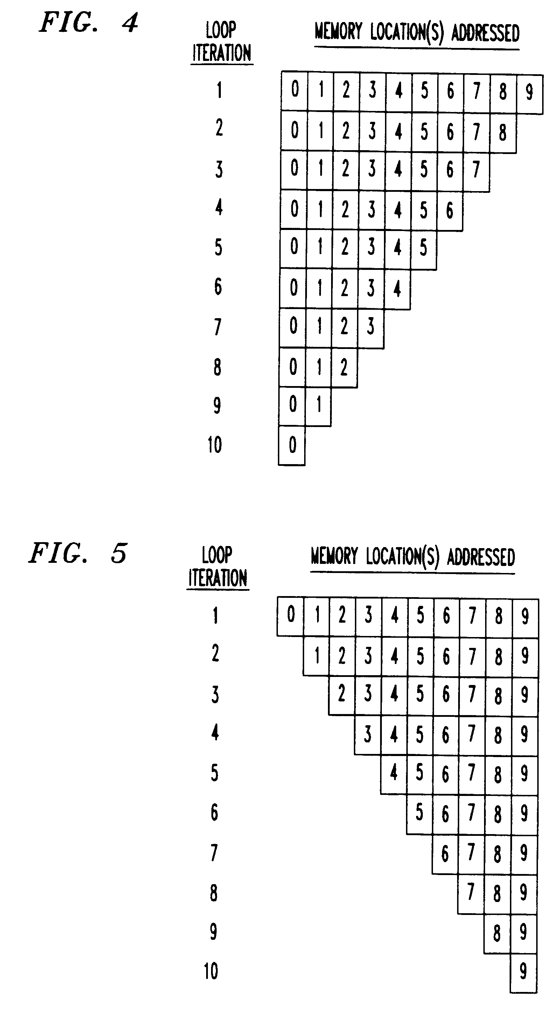

Figure 4 illustrates triangular addressing where the beginning address remains constant and the ending address is decremented by one each loop iteration. This version of triangular addressing may be referred to as an upper left triangle of addresses. The only difference in operation of address management system 20 between Figures 3 and 4 is that select input 84 selects from inputs 86 a minus one as output 90. The minus one is added to the ending address in adder 92 when load control signal 94 is high to cause subsequent ending addresses to be decremented by one each loop iteration. This is illustrated in Figure 4 through 10 iterations.

Figure 5 illustrates triangular addressing where the beginning address is increased by one each loop iteration while the ending address remains constant. This version of triangular addressing may be referred to as an upper right triangle of addresses. Operation of memory management system 20 shown in Figure 1 to achieve the triangular addressing illustrated in Figure 3 provides both a beginning address to beginning address register 24 and an ending address to ending register 28. Load control signal 94 is maintained in a low state such that adder 92 does not change the ending address retained in ending address register 28. Load control signal 80 is high and select input 70 selects from inputs 72 plus one as output 76. This causes adder 78 to increment the previous beginning address by one each iteration. Ten iterations are illustrated in Figure 5.

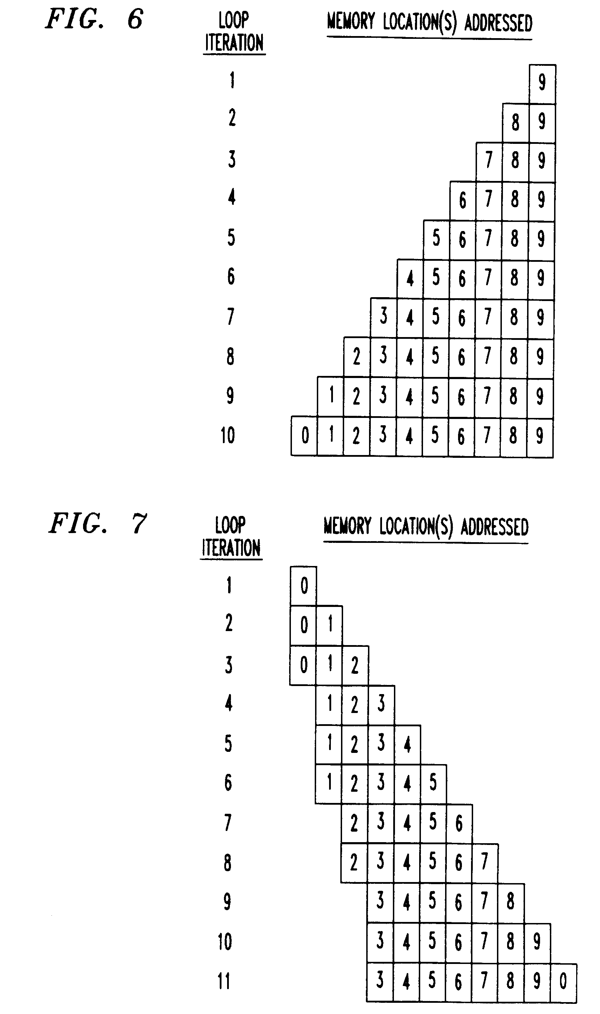

Figure 6 illustrates triangular addressing where the ending address remains constant and the beginning address is decremented by one each loop iteration. This version of triangular addressing may be referred to as a lower right triangle of addresses. Load control signal 94 remains low thereby retaining the initial ending address as provided to ending address register 28. A beginning address is provided to beginning address register 24, load control signal 80 is high, and select input 70 selects from input 72 minus one as output 76. Adder 78 causes the beginning address to be decremented by one each iteration. Ten iterations are illustrated in Figure 6.

Figure 7 illustrates triangular addressing where both the beginning address and the ending address are incremented by different values at different iterations. The beginning address is incremented each third iteration, whereas the ending address is incremented by one each iteration. It should be evident that in a similar manner both the beginning address and ending address may be decremented.

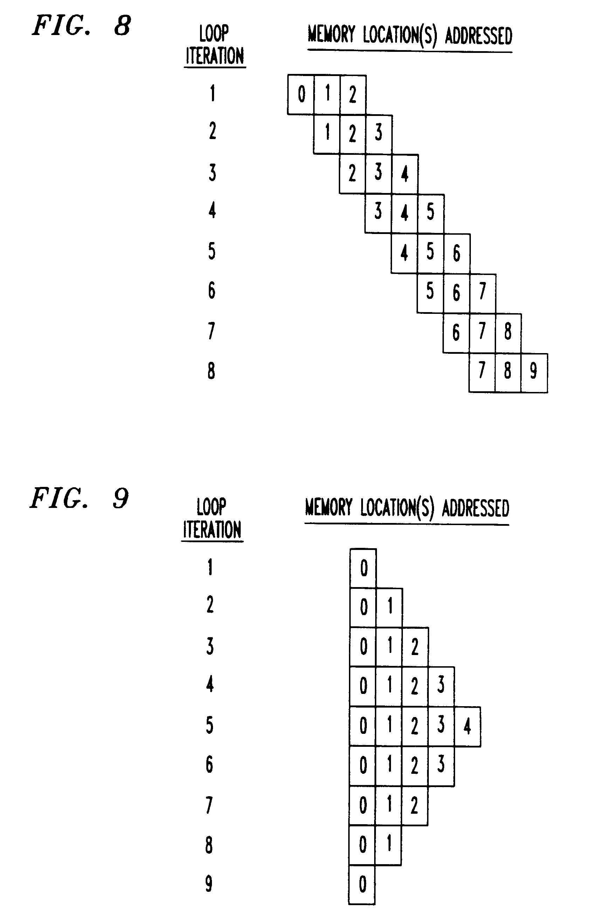

Figure 8 illustrates triangular addressing where both the beginning and ending addresses are incremented by the same value every iteration. This is functionally equivalent to having a moving window over a data buffer. It should be evident that both the beginning and the end address may be incremented or decremented.

Figure 9 illustrates triangular addressing where the beginning address remains constant, and the ending address is increased by one each loop iteration, for a predetermined number of iterations, illustrated as four iterations, by select input 84 selecting plus one as output 90, and thereafter decremented by one each loop iteration by select input 84 selecting minus one as output 90 for a predetermined number of iterations, illustrated as four iterations. It should be evident that the ending address could be decremented by a predetermined number of iterations, followed by being incremented by a predetermined number of iterations with the beginning address remaining constant. It should be evident that the ending address could remain constant and the beginning address could be either decremented for a predetermined number of iterations followed by being incremented by a predetermined number of iterations, or incremented for a predetermined number of iterations followed by being decremented by a predetermined number of iterations.

The invention can be implemented in an integrated circuit fabricated using any known very large scale integrated circuit processing technology.

While the illustrated embodiment of the invention illustrates incrementing or decrementing the beginning address or ending address by the values 2, 1, -1 or -2, it is recognized that using other values to increment or decrement the beginning or ending addresses are within the scope of the invention. Furthermore, while the invention has been illustrated as including an adder for adding an increment or decrement value to a beginning or ending address, other methods of changing the beginning or ending addresses, such as using an up/down counter, are within the scope of the invention. Finally, if the beginning and end addresses are both left unchanged then the conventional modulo addressing for a circular buffer is obtained.

While several combinations of beginning address remaining constant or changing and the ending address remaining constant or changing have been illustrated, the invention is not limited to only the combinations illustrated.

## Claims

1. An integrated circuit including a memory management system, including:
a first address register (24 or 28) adapted to store a first address
CHARACTERIZED BY
a first address changing device (78 or 92) adapted to change the first address (26 or 30) stored in the first address register (24 or 28); and
a selector (74 or 88) adapted to determine the size of the change of the first address, coupled to the first address changing device (78 or 92) for changing the first address.

2. An integrated circuit as recited in claim 1, characterized in that the first address register (24 or 28) is a beginning address register (24).

3. An integrated circuit as recited in claim 1, characterized in that the first address register (24 or 28) is an ending address register (30).

4. An integrated circuit as recited in claim 1, 2 or 3 characterized in that the integrated circuit is a digital signal processor.

5. An integrated circuit as recited in claim 1, including a second address register (28) adapted to store a second address (30), further characterized by
a second address changing device (92) adapted to change the second address (30) stored in the second address register (28); and
a device (88) adapted to determine the size of the change of the second address, coupled to the second address changing device (92) for changing the second address.

6. An integrated circuit as recited in claim 5, characterized in that the first address register is an ending address register (28).

7. An integrated circuit as recited in claim 5, characterized by the integrated circuit is a digital signal processor.

8. A method of addressing memory, characterized by:
loading a first register (24 or 28) with an address;
selecting (74 or 88) a value by which the address is changed each iteration; and
changing the address stored in the register by the selected value each iteration.

9. A method of addressing memory as recited in claim 8, further characterized by the step of modifying the value by which one of the beginning address and ending address is changed.

10. A method of addressing memory as recited in claim 8, characterized in that the step of changing the address stored in the register comprises:
incrementing the address stored in the register.

11. A method of addressing memory as recited in claim 8, characterized in that the step of changing the address stored in the register comprises:
decrementing the address stored in the register.

12. A method of addressing memory as recited in claim 8, further characterized by the steps of:
loading a second register (28 or 24) with a second address;
selecting (88 or 74) a second value by which the second address is changed each iteration; and
changing the second address by the second value each iteration.

13. A method of addressing memory, characterized by the steps of:
setting an address in an address pointer (44);
setting a beginning address in a beginning address register (26);
setting an ending address in an ending address register (30);
selecting (74 or 88) a value by which one of the beginning address and the ending address is changed;
establishing an iterative loop;
selecting a beginning address or an ending address as a boundary address;
comparing the boundary address to the address in the address pointer (44).
